# FASCICULE DE BREVET EUROPEEN

(11) **EP 0 970 312 B1**
(45) Date de publication et mention de la délivrance du brevet: **04.12.2002**
(21) Numéro de dépôt: 98917188.9
(22) Date de dépôt: 20.03.1998
(51) Int. Cl.: F16B 25/00

(54) **NOUVELLE VIS A BOIS A FILET DECOUPE**
HOLZSCHRAUBE MIT GESCHNITTENEM GEWINDE
NOVEL WOOD SCREW WITH CUT-OUT THREAD

(30) Priorité: 28.03.1997 FR 9704110
(43) Date de publication de la demande: 12.01.2000
(73) Titulaire: Omnivis, 69330 Meyzieu (FR)
(72) Inventeur: PETIT, Pierre-Yves, F-69330 Meyzieu (FR)
(74) Mandataire: Richebourg, Michel François
(86) Numéro de dépôt international: FR9800558
(87) Numéro de publication internationale: WO98044268

(56) Documents cités:
- DE-A- 2 815 247
- DE-U- 29 504 559
- FR-A- 385 906
- GB-A- 667 051
- GB-A- 1 120 991
- US-A- 4 842 467

## Description

La présente invention concerne le secteur technique des vis à bois et de leur fabrication. L'invention concerne sous ce même vocable toutes les applications à tous les types analogues de vis pour lesquels se pose le même problème technique ou un problème voisin.

On sait qu'une vis comporte de manière générale trois partie que l'on peut désigner par la tête de vis, en général conique, le corps de vis, en général cylindrique, et le pointe de vis, qui termine le corps de vis par une partie plus effilée se terminant en pointe.

Un filet court en hélice autour du corps de vis et jusqu'à la pointe.

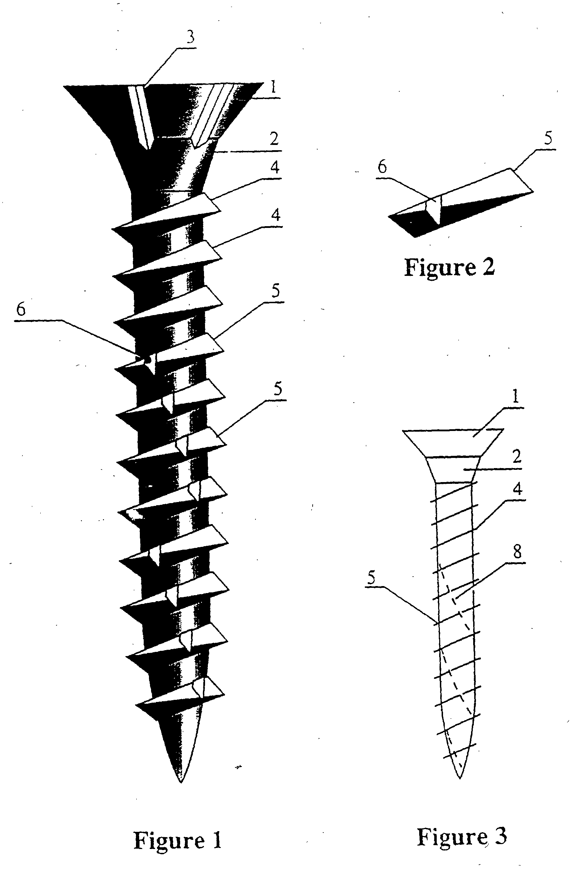

Selon des variantes également connues et qui font également partie de l'invention, la tête de vis peut former un cône à plusieurs angles, par exemple à deux angles comme représenté sur la Fig. 1, et sa surface latérale peut comporter des crans, également comme représenté.

Des stries peuvent également être usinées en fond de filet.

De manière également connue, le filet hélicoïdal est biseauté comme représenté schématiquement sur la Figure 2.

En matière de vissage, il importe d'assurer une bonne résistance à l'arrachement lorsque la vis est en place, mais aussi d'obtenir une pénétration de la vis dans le bois aussi facile et rapide que possible. Ces deux caractéristiques sont néanmoins antagonistes et divers compromis ont donc été recherchés dans l'industrie.

Certains modèles de vis à bois ont par exemple utilisé à la fois une dentelure du bord du filet et une augmentation du pas du filet ( le "pas" mesure comme on le sait la pénétration obtenue pour un tour de vissage ). On obtient généralement une plus grande vitesse de pénétration par l'augmentation du pas du filet, mais pas nécessairement une plus grande facilité de pénétration. La facilité est en effet liée au couple de vissage nécessaire pour obtenir une vitesse donnée; augmenter le pas du filet doit donc logiquement augmenter la vitesse de pénétration, mais dans certains cas au détriment de la facilité.

Il existe actuellement une demande importante, de la part notamment des fabricants de meubles, pour une vis à bois à pénétration rapide. Naturellement, les utilisateurs recherchent aussi des caractéristiques satisfaisantes de résistance à l'arrachement. Enfin, le coût représente un facteur très important, dans un secteur de technicité relativement faible.

On connaît notamment un tel modèle de vis à bois sur laquelle le bord du filet est ondulé. Selon le fabricant, ceci confère un "effet de ressort" qui expliquerait un couple de vissage plus faible. Il semble cependant que ce résultat soit davantage à attribuer à l'augmentation du pas du filet. le coût de l'usinage de l'ondulation est par ailleurs élevé.

On connaît également un autre modèle de vis dont le filet n'est pas modifié, mais dont la pointe est formée en taraud, ce qui assure une plus grande facilité de pénétration. Ce modèle est d'usinage plus complexe et doit de plus avoir recours à des stries en fond de filet.

On connaît par le GB 1 120 991 une vis à bois dont le filet est interrompu par de larges rainures qui s'étendent de façon hélicoïdale sur la partie filetée de la vis et qui sont arrangées de telle façon qu'elles ont une intersection avec le filet. La vis présente une pluralité de protubérances qui s'étendent radialement vers l'extérieur.

On connaît également, selon le US 4 842 467 ou le DE 295 04 559, des vis auto-taraudeuses pour matériaux tels que structures de maçonnerie, béton, ... De telles vis comportent des espaces creusés dans le filet et disposés le long d'une spirale, qui sont destinés à recevoir des débris de perçage dus à la friabilité des matériaux dans lesquels elles sont vissées.

Selon l'invention, on ne modifie pas le corps de vis et on n'a pas recours à un " effet de ressort ". Au contraire, le filet est simplement entaillé et cette modification très simple conduit de manière surprenante à une meilleure facilité et à une plus grande vitesse de pénétration d'une part, et à une excellente résistance à l'arrachement d'autre part.

Avec un filet ondulé de l'art antérieur, il était logique de conserver une bonne résistance à l'arrachement. Au contraire, avec le filet " découpé " et donc relativement discontinu de l'invention, il aurait été logique de craindre une forte réduction de la résistance à l'arrachement, qui ne se produit pas.

L'invention sera mieux comprise à la lecture de la description qui va suivre, et en se référant au dessin annexé, sur lequel:
- la Figure 1 représente schématiquement une vue latérale d'une vis selon l'invention;
- la figure 2 représente un agrandissement d'un filet découpé de la Figure 1;
- la Figure 3 représente très schématiquement la forme hélicoïdale de l'alignement des découpes du filet, en enroulement autour du corps de vis.

Sur les figures, on a représenté une vis dont la tête est formée de deux cônes (1) et (2), le cône supérieur comportant des crans (3), et dont le corps ( non référencé ) comporte un filet dont la partie inférieure (5) est pourvue de découpes ( ou encoches ) (6) selon l'invention, depuis la pointe (7), tandis que la partie supérieure (4) du filet n'est pas pourvue de telles découpes.

Sur les Figures, on a représenté une seule hélice de découpes (8) mais l'invention couvre également la variante selon laquelle chaque rang de filet est découpé plusieurs fois ( deux, trois ou quatre fois ) pour créer plusieurs hélices (8) de telles découpes.

Selon l'invention, le filet (5) comporte au moins une série de découpes (6) ménagées dans le filet, sur au moins une partie de la longueur de la vis. II est essentiel que les découpes ( ou encoches ) (6) soient présentes à partir de la pointe de la vis. Pour bien amorcer le vissage, au moins deux rangs de filet seront ainsi découpés, et de préférence trois ou quatre à six. Au delà, on ne note plus d'amélioration utile car la résistance à l'arrachement diminue alors. De préférence, ces découpes forment quatre lignes de découpe (8) en hélice autour du corps de vis.

La découpe préférée selon l'invention est en forme d'encoche en " V " comme représenté. L'invention n'est cependant pas limitée à cette variante et d'autres formes de découpes seront immédiatement accessibles à l'homme de métier. La forme en encoche en " V " semble représenter le mode de réalisation le plus simple, et peut être obtenue facilement à l'échelle industrielle dans l'opération dite de " roulage " de la vis

Sans vouloir être limitée par une quelconque théorie, la demanderesse pense que la découpe selon l'invention est de nature à cisailler les fibres du bois, contrairement à l'art antérieur, et notamment des bois très durs. Pour de tels bois très durs, on opérait auparavant un " pré-trou " et l'invention permet de s'en affranchir, ce qui représente un gain de temps important lors, par exemple, de l'assemblage d'un meuble. Une application particulièrement intéressante de l'invention concerne donc ces bois durs à très durs.

Les autres caractéristiques de la vis, telles que pas du filet, angle du filet, angle de pointe, longueur et diamètre de vis etc.... seront adaptées par l'homme de métier selon les critères habituels.

## Revendications

1. Vis à bois **caractérisée en ce qu'**elle présente un filet continu et **en ce que** le filet (5) comporte au moins une série de découpes (6) ménagées dans ledit filet, sur au moins une partie de la longueur de la vis à partir de la pointe de la vis.

2. Vis à bois selon la revendication 1, **caractérisée en ce qu'**au moins deux rangs de filet sont munis de découpes (6).

3. Vis à bois selon la revendication 1 ou 2 **caractérisée en ce que** trois, ou quatre à six rangs de filet sont munis de découpes (6).

4. Vis à bois selon l'une quelconque des revendications 1 à 3 **caractérisée en ce que** la découpe (6) est en forme d'encoche en "V".

5. Vis à bois selon l'une quelconque des revendications 1 à 4 **caractérisée en ce que** le filet (5) comporte une seule hélice (8) de découpes (6).

6. Vis à bois selon l'une quelconque des revendications 1 à 4 **caractérisée en ce que** le filet (5) comporte plusieurs hélices (8) de découpes (6), et notamment deux, trois ou quatre telles hélices.

## Patentansprüche

1. Holzschraube, **dadurch gekennzeichnet, dass** sie ein kontinuierliches Gewinde aufweist und dadurch, dass das Gewinde (5) mindestens eine Reihe von Einschnitten (6) aufweist, die von der Schraubenspitze aus mindestens über einen Teil der Schraubenlänge in dieses Gewinde eingearbeitet sind,

2. Holzschraube nach Anspruch 1, **dadurch gekennzeichnet, dass** mindestens zwei Gewindereihen Einschnitte (6) aulweisen,

3. Holzschraube nach Anspruch 1 oder 2, **dadurch gekennzeichnet, dass** drei oder vier bis sechs Gewindereihen Einschnitte (6) aufweisen,

4. Holzschraube nach einem der Ansprüche 1 bis 3, **dadurch gekennzeichnet, dass** der Einschnitt (6) in einer V-förmigen Einkerbung besteht,

5. Holzschraube nach einem der Ansprüche 1 bis 4, **dadurch gekennzeichnet, dass** das Gewinde (5) eine einzige Wendel (8) aus Einschnitten (6) aufweist,

6. Holzschraube nach einem der Ansprüche 1 bis 4, **dadurch gekennzeichnet, dass** das Gewinde (5) mehrere Wendeln (8) aus Einschnitten (6) und insbesondere zwei, drei oder vier solcher Wendeln aufweist.

## Claims

1. Wood screw wherein it has a continuous thread and wherein the thread (5) has at least one set of cut-outs (6) made out in the said thread, over at least one part of the length of the screw from the point of the screw.

2. Wood screw according to claim 1 wherein at least two rows of thread have cut-outs (6).

3. Wood screw according to claim 1 or 2 wherein three or four to six rows of thread have cut-outs (6).

4. Wood screw according to any one of claims 1 to 3 wherein the cutout (6) is a "V"-shaped slot.

5. Wood screw according to any one of claims 1 to 4 wherein the thread (5) has a single helix (8) of cut-outs.

6. Wood screw according to any one of claims 1 to 4 wherein the thread (5) has several helixes (8) of cut-outs (6) and namely two, three or four such helixes.
